# EUROPEAN PATENT APPLICATION

(11) **EP 2 648 308 A1**
(43) Date of publication of application: **09.10.2013**
(21) Application number: 12163504.9
(22) Date of filing: 07.04.2012
(51) Int. Cl.: H02J 7/00

(54) **Portable illuminating and charging device with touch switch**

(71) Applicant: Guangdong Jetfast Portable Lighting Co., Ltd., Guangdong (CN)
(72) Inventor: Liu, Yun-Zhao, Zhongshan City, Guangdong (CN)
(74) Representative: Jeannet, Olivier

(57) **Abstract**

A portable illuminating and charging device with a touch switch including includes a housing (1), at least one light emitting element (2), a touch control unit (3), and a discharging output interface (4) is revealed. The housing (1) consists of a main body (12) and a cap body (13) connected with each other and respectively with a close receiving space (11). The light emitting element (2), the touch control unit (3) and the discharging output interface (4) are arranged in the receiving space (11) of the cap body (13). The touch control unit (3) is formed by a touch control board (31) and a sensor (32). The touch control board (31) is electrically connected to the light emitting element (2) and the sensor (32) respectively. Thereby the touch control board (31) generates signals for conduction of circuit between an electrical storage device (5) and the light emitting element (2) to illuminate when users lightly touch the cap body (13) of the housing (1) and the sensor (32) is triggered.

## Description

### BACKGROUND OF THE INVENTION

### 1. Field of the Invention

The present invention relates to an illuminating and charging device, especially to a portable illuminating and charging device with a touch switch. Users only need to lightly touch a housing of the charging device for controlling on/off of light emitting elements and the charging device can be used as a flashlight. The illuminating and charging device is multi-functional, easy to carry and cost-saving.

### 2. Description of Related Art

Nowadays electronic devices (including mobile phones, cameras, notebooks, personal digital assistant (PDA), handheld game console, tablet computers, etc. ) with various charging slots (such as USB, UART, PS/2, IEEE1394, etc.) become increasingly popular. All these electronics use rechargeable batteries such as lithium batteries as power supply. When users go out and the battery of electronics is run out, the problem of inconvenience in charging has never been solved.

As a result, a portable power supply is provided. For example, a portable charger has been used broadly. The charger is portable and used as an emergency power supply for electronic devices. While camping outdoors or traveling, users can carry portable chargers with them. However, at night or in the dark, it takes a lot time to look for a flashlight firstly and then find out the portable charger. Thus this is inconvenient for users. Moreover, the flashlight is used only in case of a power failure. Thus it's difficult to find where the flashlight is placed. During power failure, users often get hurt stumbling around in the dark while looking for the flashlight.

### SUMMARY OF THE INVENTION

Therefore it is a primary object of the present invention to provide a portable illuminating and charging device with a touch switch that can be used as a flashlight while camping or traveling and as an emergency power supply for electronic devices in case of emergency. The present invention provides multiple functions with features of easy carrying and cost-saving.

In order to achieve the above object, a portable illuminating and charging device with a touch switch mainly includes a housing, at least one light emitting element, a touch control unit, and a discharging output interface. The housing consists of a main body and a cap body connected with each other and respectively having a close receiving space. The cap body is made from transparent material. The light emitting element, the touch control unit and the discharging output interface are arranged in the receiving space of the cap body. The touch control unit is composed of a touch control board and a sensor. The sensor is disposed on a side wall of the cap body while the touch control board is arranged at a bottom wall of the cap body that is corresponding to the main body. The touch control board is electrically connected to the light emitting element and the sensor respectively. When the sensor is triggered, the touch control board generates signals for turning on or off the light emitting element in the housing. The discharging output interface is electrically connected to the touch control board and the housing is further arranged with a hole corresponding to the discharging output interface. The electrical storage device for storing electricity is disposed with and electrically connected to a charging input interface. The housing is disposed with a hole corresponding to the charging input interface.

While at night or in the dark, users can give a tap to the cap body of the housing to trigger the sensor on the side wall of the cap body. Thus the touch control board produces signals for conducting circuit between the electrical storage device and the light emitting element. Light is emitted from the light emitting element to the surrounding environment for providing illumination.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment according to the present invention;
Fig. 2 is a perspective view of a disassembled embodiment according to the present invention;
Fig. 3 is a block diagram showing electrical connection of an embodiment according to the present invention;
Fig. 4 is a perspective view of an embodiment used as an illuminating device according to the present invention;
Fig. 5 is a perspective view of an embodiment in which a sensor is triggered and then a discharging output interface is going to be connected to an electronic device according to the present invention;
Fig. 6 is a perspective view of an embodiment in which a discharging output interface is connected to an electronic device according to the present invention.

### DETAILED DESCRIPTION OF THE PREFERRED EMBODIMENT

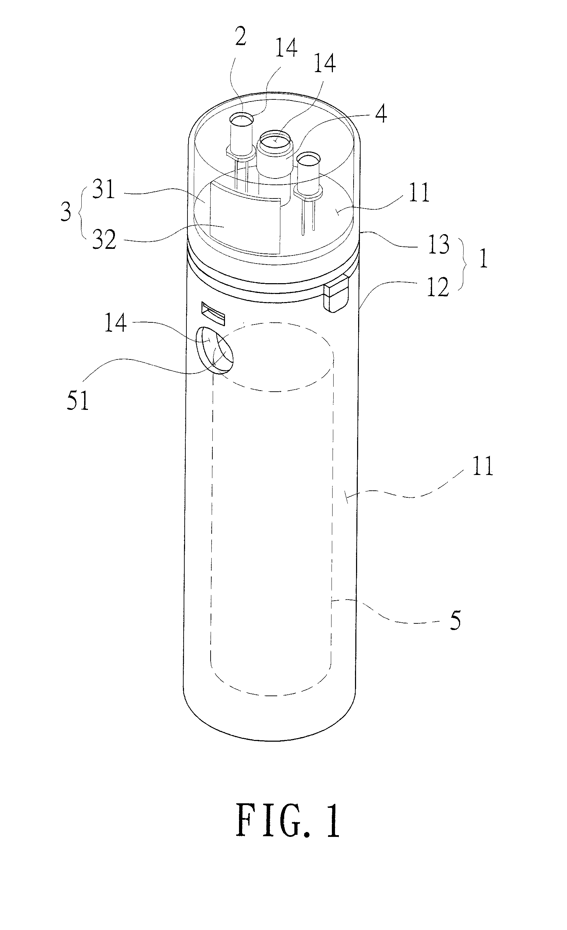

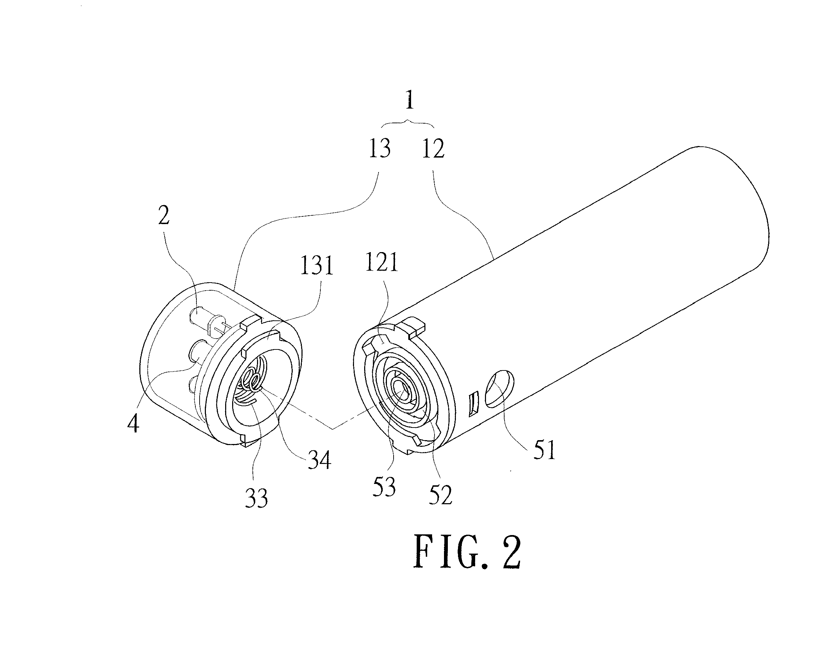

Refer to Fig. 1 and Fig. 2, a portable illuminating and charging device with a touch switch of the present invention includes a housing 1, at least one light emitting element 2, a touch control unit 3, a discharging output interface 4, and an electrical storage device 5.

The housing 1 consists of a main body 12, and a cap body 13 connected to the main body 12. The main body 12 and the cap body 13 respectively include a close receiving space 11. In this embodiment, at least two locking blocks 131 are disposed projectingly on edges of an opening end of the cap body 13. And two slots 121 corresponding to the locking blocks 131 are arranged at edges of an opening end of the main body 12. The cap body 13 is made from transparent material. The housing 1 is a cylinder.

The light emitting element 2 is mounted in the receiving space 11 of the cap body 13 and the cap body is disposed with a hole 14 corresponding to the light emitting element 2. The light emitting element 2 can be a light bulb or a light emitting diode (LED) light that stays solid or blinks. In this embodiment, the light emitting elements 2 are two LED lights set in the cap body 13.

The touch control unit 3 including a touch control board 31 and a sensor 32 is arranged in the receiving space 11 of the cap body 13. The sensor 32 is disposed on a side wall of the cap body 13 while the touch control board 31 is set on a bottom wall of the cap body 13 that is corresponding to the main body 12. The touch control board 31 is electrically connected to the light emitting element 2 and the sensor 32 respectively. When the sensor 32 is triggered, the touch control board 31 generates signals for turning on or off the light emitting element 2.

The discharging output interface 4 is disposed in the receiving space 11 of the cap body 13 and is electrically connected to the touch control board 31. The housing 1 is further arranged with a hole 14 corresponding to the discharging output interface 4.

The electrical storage device 5 is mounted in the receiving space 11 of the main body 12 for storing electricity and is also electrically connected to the touch control board 31. The electrical storage device 5 is disposed with and electrically connected to a charging input interface 51. The housing 1 is disposed with a hole 14 corresponding to the charging input interface 51.

Moreover, the receiving space 11 of the main body 12 is arranged with a positive electrode plate 52 and a negative electrode plate 53 respectively connected to the electrical storage device 5. The receiving space 11 of the cap body 13 is disposed with a positive-electrode contact spring 33 and a negative-electrode contact spring 34 respectively corresponding to and electrically connected to the positive electrode plate 52 and the negative electrode plate 53. The positive-electrode contact spring 33 and the negative-electrode contact spring 34 are electrically connected to the touch control board 31. The positive electrode plate 52 and the negative electrode plate 53 are in a circular form..

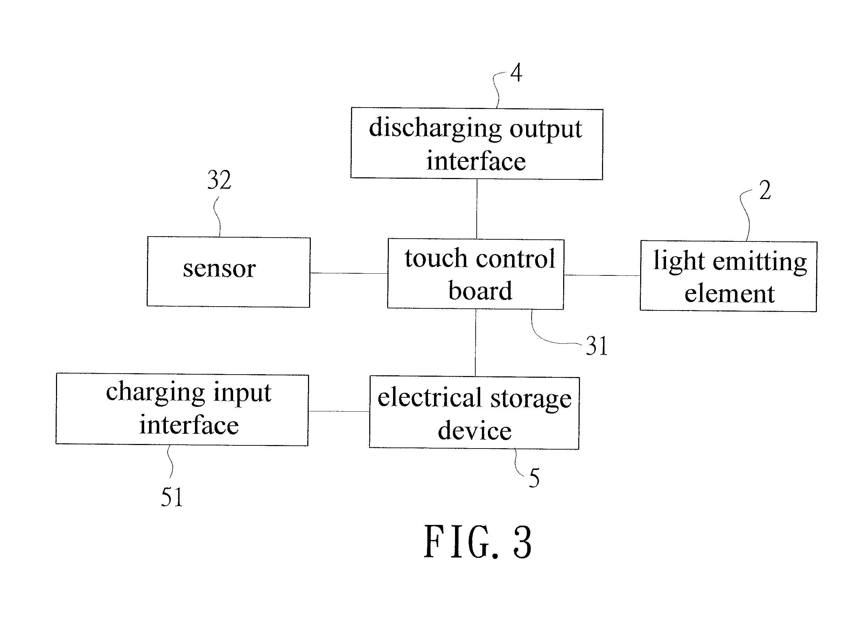

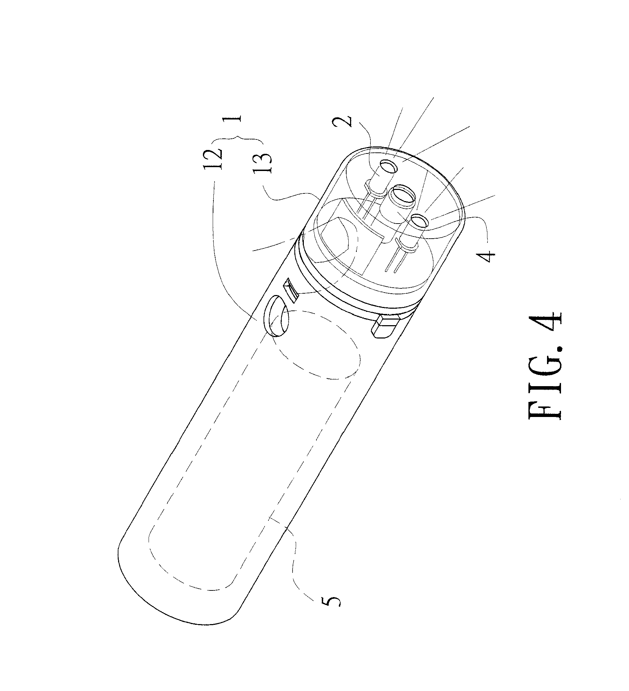

While in use, refer to Fig. 2 and Fig. 3, in a dark environment or at night, users can touch the cap body 13 of the housing by their fingers so as to trigger the sensor 32 at the side wall of the cap body 13. Thus the touch control board 31 produces signals for conducting circuit between the electrical storage device 5 and the light emitting element 2. Thus current flows from the positive electrode plate 52 of the electrical storage device 5, through the positive-electrode contact spring 33, the touch control board 31, the light emitting element 2, the touch control board 31, the negative-electrode contact spring 34, the negative electrode plate 53, and finally back to the electrical storage device 5, forming a current loop. At this moment, light from the light emitting element 2 is emitted to light up the surrounding area, as shown in Fig. 4. While camping outdoors or traveling, users don't need to carry flashlights by using the present invention.

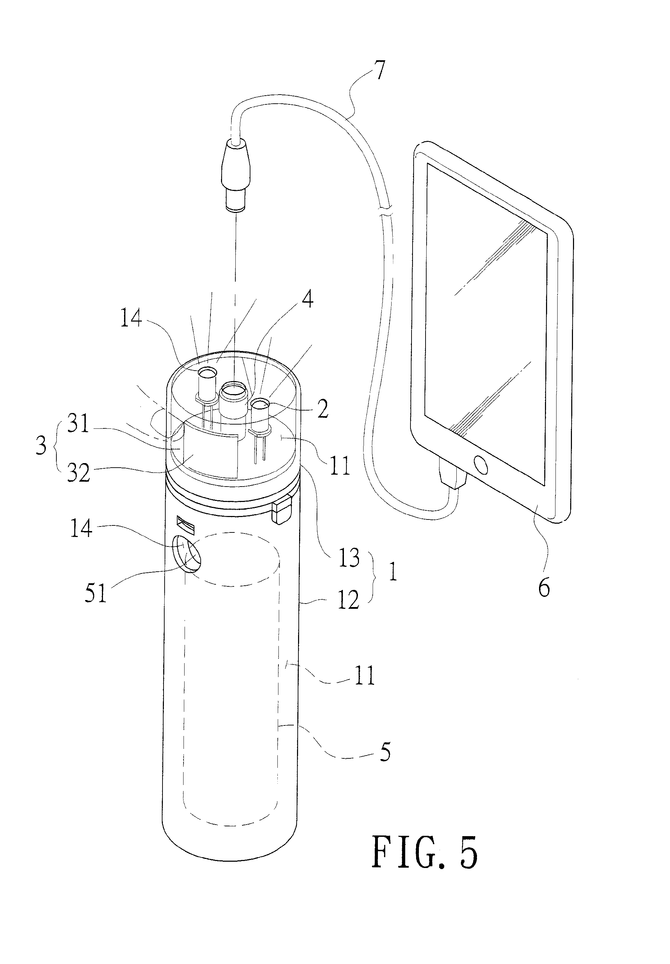

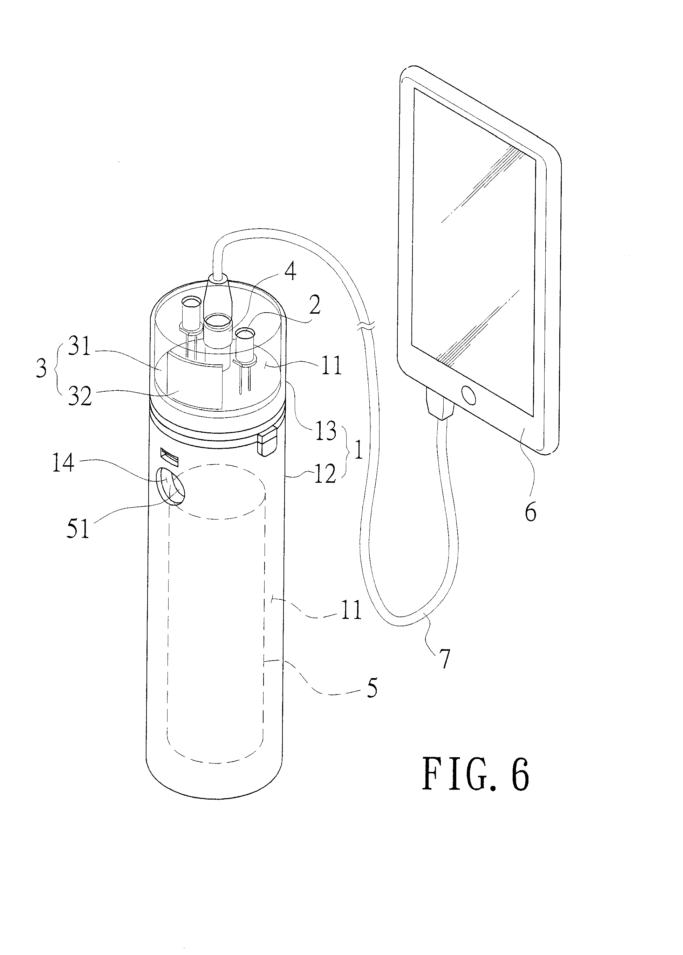

Refer to Fig. 5 and Fig. 6, the electrical storage device 5 is connected to an electronic device 6 by a power cord 7 so as to transmit power from the electrical storage device 5 to the electronic device 6. Moreover, when power in the electrical storage device 5 is running out, one end of another power cord 7 (not shown in figure) is plugged into a mains socket while the other end thereof is plugged into the charging input interface 51 through the hole 14 of the main body 12.

Compared with devices available now, the present invention has following advantages;
1. By the sensor on the side wall of the cap body, users only need to give a light tap to the cap body of the housing and then the touch control board generates signals for conducting or cutting off circuit between the electrical storage device and the light emitting element. Thus the light is turned on or off.
2. The electrical storage device mounted in the receiving space of the main body is electrically connected to the touch control board and the light emitting element respectively. Thus the device of the present invention can not only be used as an emergency power supply but also as a flashlight independently. The device is multi-functional. Moreover, the device is easy to carry and cost-saving.
3. The present invention combines a power supply for electronics and illumination device in a single device. Ordinarily users can learn the position of the device easily. In a sudden power failure, the device of the present invention can be used for illumination immediately and there is no need to spend time on looking for flashlights in the dark.

Additional advantages and modifications will readily occur to those skilled in the art. Therefore, the invention in its broader aspects is not limited to the specific details, and representative devices shown and described herein.

Accordingly, various modifications may be made without departing from the spirit or scope of the general inventive concept as defined by the appended claims and their equivalent.

## Claims

1. A portable illuminating and charging device with a touch switch comprising:
a housing (1) including a main body (12) and a cap body (13) connected to the main body (12) while the main body (12) and the cap body (13) respectively having a close receiving space (11);
at least one light emitting element (2) mounted in the receiving space (11) of the cap body (13);
a touch control unit (3) that is disposed in the receiving space (11) of the cap body (13) and is including a touch control board (31) arranged at a bottom wall of the cap body (13) and a sensor (32) disposed on a side wall of the cap body (13); the touch control board (31) is electrically connected to the light emitting element (2) and the sensor (32) respectively; the touch control board (31) generates signals for turning on or off the light emitting element (2) while the sensor (32) being triggered;
a discharging output interface (4) that is disposed in the receiving space (11) of the cap body (13) and is electrically connected to the touch control board (31); the housing (1) is further arranged with a hole (14) corresponding to the discharging output interface (4); and
an electrical storage device (5) that is mounted in the receiving space (11) of the main body (12) for storing electricity and is electrically connected to the touch control board (31); the electrical storage device (5) is disposed with and electrically connected to a charging input interface (51); the housing (1) is further disposed with a hole (14) corresponding to the charging input interface (51).

2. The device as claimed in claim 1, wherein the receiving space (11) of the main body (12) is disposed with a positive electrode plate (52) and a negative electrode plate (53) while the positive electrode plate (52) and the negative electrode plate (53) are respectively connected to the electrical storage device (5); the receiving space (11) of the cap body (13) is arranged with a positive-electrode contact spring (33) and a negative-electrode contact spring (34) respectively corresponding to and electrically connected to the positive electrode plate (52) and the negative electrode plate (53); the positive-electrode contact spring (33) and the negative-electrode contact spring (34) are electrically connected to the touch control board (31).

3. The device as claimed in claim 2, wherein both the positive electrode plate (52) and the negative electrode plate (53) are in a circular form.

4. The device as claimed in claim 1, wherein at least two locking blocks (131) are disposed projectingly on edges of an opening end of the cap body (13) and at least two slots (121) corresponding to the locking blocks (131) respectively are arranged at edges of an opening end of the main body (12).

5. The device as claimed in claim 1, wherein the cap body (13) is made from transparent material.

6. The device as claimed in claim 1, wherein the cap body (13) is disposed with at least one hole (14) corresponding to the light emitting element (2).

7. The device as claimed in claim 1, wherein the housing (1) is a cylinder.

8. The device as claimed in claim 1, wherein the light emitting element (2) is a light bulb or a light emitting diode (LED) light that stays solid or blinks.
